**Europäisches Patentamt**

**European Patent Office**

**Office européen des brevets**

(19)

(11) Veröffentlichungsnummer: **0 036 894**
**A1**

(12) # EUROPÄISCHE PATENTANMELDUNG

(21) Anmeldenummer: **80101441.6**

(22) Anmeldetag: **19.03.80**

(51) Int. Cl.³: **F 23 K 3/02**
**B 65 G 53/22, B 65 D 88/72**

(43) Veröffentlichungstag der Anmeldung:
**07.10.81 Patentblatt 81/40**

(84) Benannte Vertragsstaaten:
**BE IT**

(71) Anmelder: **Schoppe, Fritz, Dr.-Ing.**
**Max-Rüttgers-Strasse 24**
**D-8026 Ebenhausen/Isartal(DE)**

(72) Erfinder: **Schoppe, Fritz, Dr.-Ing.**
**Max-Rüttgers-Strasse 24**
**D-8026 Ebenhausen/Isartal(DE)**

(74) Vertreter: **Wey, Hans-Heinrich, Dipl.-Ing. et al,**
**Patentanwälte Müller-Börner Wey & Körner**
**Widenmayerstrasse 49**
**D-8000 München 22(DE)**

(54) **Kohlenstaubtank mit Einrichtung zum dosierten Austragen insbesondere kleiner Kohlenstaubmengen.**

(57) Kohlenstaubtank mit Einrichtung zum dosierten Austragen insbesondere kleiner Kohlenstaubmengen in einem gleichmäßigen Strom, welcher folgende Merkmale aufweist: dem Kohlenstaubtank (1) ist ein die Dosier- und Austragseinrichtung enthaltender Dosierbehälter (11) zugeordnet, welche beide mittels einer im tiefsten Bereich des Tanks angeordneten Leitung oder Öffnung (15) miteinander verbunden sind; in dem Kohlenstaubtank und in dem Dosierbehälter sind luftdurchlässige Böden (4 bzw 12) angeordnet, von welchen zumindest derjenige im Kohlenstaubtank (4) unter einem Winkel von etwa 8 bis 15°, vorzugsweise etwa 10°, gegenüber einer Horizontalen geneigt ist und sich bis an die Kohlenstaub-Austrittsöffnung des Tanks erstreckt; der unter dem luftdurchlässigen Boden im Tank befindliche Raum ist durch Stege od.dgl. in mehrere Kammern unterteilt; in die unter den luftdurchlässigen Böden im Tank und im Dosierbehälter befindlichen Räume münden Druckluftleitungen, (5 bzw L2) von welchen die an die Kammern unter dem Boden im Tank angeschlossenen Druckluftleitungen (5) mit einem die Druckluft periodisch, stoßweise pulsierend abgebenden Luftverteiler (6) verbunden sind; der Kohlenstaubtank ist an seiner höchsten Stelle mit einem Tankdom (2) od.dgl. verbunden, dessen Innenraum mittels eines Filters (8) gegen den Innenraum des Tanks abgeteilt ist und in welchem einerseits eine vorzugsweise an den Druckluft periodisch, gegebenenfalls stoßweise pulsierend abgebenden Luftverteiler (6) angeschlossene Druckluftleitung (L3") einmündet und in dessen Wandung sich eine mit der Atmosphäre in Verbindung stehende, eine vorzugsweise einstellbare Drossel (9) enthaltende Öffnung befindet; der Raum oberhalb der Kohlenstaubsäule im Dosierbehälter ist über eine Leitung (20) mit dem Raum unterhalb des Filters verbunden; in dem Dosierbehälter befinden sich zwei die programmgemäße Druckluftabgabe durch den Luftverteiler steuernde Niveausonden (13,14).

./...

EP 0 036 894 A1

Fig.1

PATENTANWÄLTE

*Müller-Börner & Wey*

D-8 MÜNCHEN 22 · WIDENMAYERSTRASSE 49          D-1 BERLIN-DAHLEM 33 · PODBIELSKIALLEE 68

BERLIN:     DIPL.-ING. R. MÜLLER-BÖRNER

MÜNCHEN:   DIPL.-ING. HANS-HEINRICH WEY
           DIPL.-ING. EKKEHARD KÖRNER

**0036894**

Dr.-Ing. Fritz Schoppe

Kohlenstaubtank mit Einrichtung zum dosierten
Austragen insbesondere kleiner Kohlenstaubmengen

Die Erfindung betrifft einen Kohlenstaubtank mit Einrichtung
zum dosierten Austragen insbesondere kleiner Kohlenstaubmengen in einem gleichmäßigen Strom. Derartige Anlagen sind
derzeit noch nicht bekannt, jedoch befinden sie sich in der
Entwicklung.

Der Erfindung liegt die Aufgabe zugrunde, aus einem größeren
Lagertank feingemahlenen Kohlenstaub in den für Heizungszwecke benötigten geringen Mengen reproduzierbar und derart
gleichmäßig herauszufördern, daß die damit gespeiste Kohlenstaubflamme, in der der Kohlenstaub Verweilzeiten von ca.
0,1 Sekunden hat, gleichmäßig und pulsationsfrei brennt. Dabei muß der in dem Tank druckfrei lagernde Kohlenstaub in
eine Förderluftleitung eingetragen werden, in der ein Druck
von etwa 0,1 bis 0,2 bar herrscht.

Versuche, die Aufgabe mit Hilfe rein mechanischer Mittel, wie z.B. Förderschnecken, Zellenräder etc.,zu lösen, führten bei einem erheblichen, nicht vertretbaren Aufwand an maschinellen Anlagen usw. und bei einem relativ hohen Energieverbrauch zu absolut unbefriedigenden Ergebnissen.

Zur Lösung der der Erfindung zugrunde liegenden Aufgabe wird vorgeschlagen, einen Kohlenstaubtank mit einer Einrichtung zum dosierten Austragen insbesondere kleiner Kohlenstaubmengen in einem weitgehend gleichmäigen Strom in der Weise auszubilden, daß er die im Patentanspruch 1 angegebenen Merkmale in Kombination miteinander aufweist. Weitere vorteilhafte Gestaltungen ergeben sich aus den Merkmalen der Unteransprüche. Ein derart erfindungsgemäß ausgebildeter Kohlenstaubtank ermöglicht einen einwandfreien und automatischen Betrieb selbst relativ kleiner Kohlenstaubfeuerungsanlagen und weiterhin die Unterbringung der Kohlenstaubtanks an räumlich beschränkten Stellen, so daß ihr nachträglicher Einbau in vorhandenen Räumen praktisch auf keine Schwierigkeiten stößt. Ein weiterer, wesentlicher Vorteil des erfindungsgemäß ausgebildeten Kohlenstaubtanks ist die leichte Zugänglichkeit zur bzw. Auswechselbarkeit der Dosier- und Austrageinrichtung im Dosierbehälter für den Fall, daß eine Störung aufgetreten sein sollte.

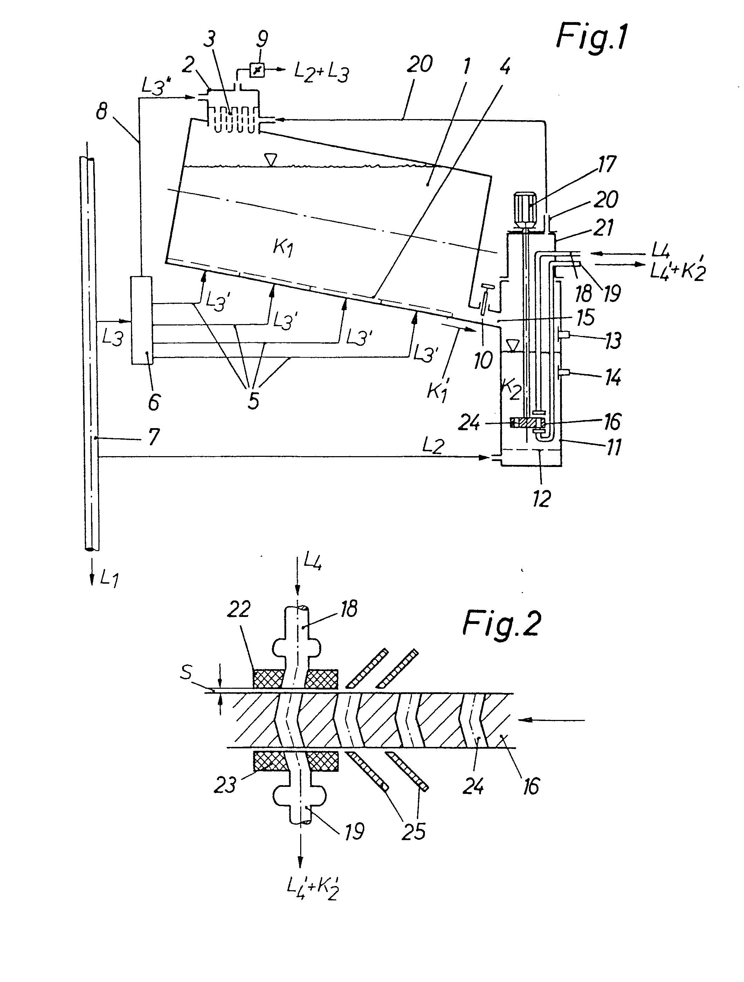

Weitere Merkmale des erfindungsgemäßen, mit einer Einrichtung zum dosierten Austragen des Kohlenstaubs ausgerüsteten Kohlenstaubtanks gehen aus den Unteransprüchen sowie aus der nachstehenden Beschreibung eines besonders bevorzugten Ausführungsbeispiels hervor, welches in den Figuren 1 und 2 der Zeichnung schematisch dargestellt ist. Es zeigen:

Fig. 1 einen Schnitt durch den Kohlenstaubtank und den
mit der Dosiereinrichtung versehenen Dosierbehälter in schematischer Darstellung, und

Fig. 2 einen Schnitt durch einen Teil der Dosiereinrichtung in vergrößertem Maßstab.

Der den Kohlenstaub zwecks Lagerung enthaltende Tank 1 ist
unter einem Winkel von etwa $10^o$ gegen eine Horizontale geneigt und mit einem Tankdom 2 im Bereich der höchsten Stelle
des Tanks 1 versehen. Der Innenraum des Tankdoms 2 ist gegen
den Innenraum des Tanks 1 durch ein Filter 3 getrennt. Im
Tank 1 befindet sich ein luftdurchlässiger Boden 4. Der Raum
unterhalb des Bodens 4 ist durch Stege od.dgl. in vier
Kammern unterteilt, in welche die Luftleitungen 5 einmünden,
die an einen Luftverteiler 6 angeschlossen sind, welcher von
der Verbrennungsluftleitung 7 mit Druckluft versorgt wird.
Über die Druckluftleitung 8 kann Druckluft in den Innenraum
des Tankdoms 2 eingeführt werden, welcher über einen mit
einer einstellbaren Drossel 9 versehenen Rohrstutzen mit der
Atmosphäre in Verbindung steht.

Der Kohlenstaubtank 1 steht über die mit einem Absperrschieber versehene Leitung 10 mit dem Behälter 11 in Verbindung, welcher die Dosiereinrichtung enthält. Im unteren
Bereich des Dosierbehälters 11 befindet sich ebenfalls ein
luftdurchlässiger Boden 12. In den Raum unterhalb des Bodens
12 mündet eine Druckluftleitung, die an die Verbrennungsluftleitung 7 angeschlossen ist. An der Wand des Dosierbehälters
11 befinden sich im Abstand voneinander und übereinander die
Niveausonden 13, 14, die den Nachschub an Kohlenstaub aus
dem Tank 1 in den Dosierbehälter 11 steuern. Durch die in
den Dosierbehälter 11 eingeleitete Luftmenge $L_2$ wird die in
ihm befindliche Kohlenstaubmenge $K_2$ fluidisiert. Sinkt das
Niveau der sich in fluidisiertem Zustand befindlichen Kohlen-

staubmenge $K_2$ bis zur unteren Niveausonde 14 ab, so wird über den Luftverteiler 6 eine Luftmenge $L_3'$ über die Luftleitung 8 in den Innenraum des Tankdoms 2 vorzugsweise pulsierend stoßartig eingeleitet, wodurch am Filter 3 sitzender Kohlenstaub abgeschüttelt und der Filter gereinigt wird. Anschließend wird von dem Luftverteiler 6 eine Luftmenge $L_3''$ anteilig und in wechselnder Folge über die Luftleitungen 5 in die Kammern unterhalb des luftdurchlässigen Bodens eingeblasen, wodurch die Kohlenstaubmenge $K_1$ im Kohlenstaubtank in Bewegung gerät und durch die Verbindungsleitung 10 in den Innenraum des Dosierbehälters 11 gefördert wird. Dies geschieht so lange, bis das Kohlenstaubniveau im Dosierbehälter 11 die Niveausonde 13 erreicht hat, wodurch im Luftverteiler 6 die Luftzufuhr zu den Luftleitungen 5 abgeschaltet wird. Zweckmäßigerweise erfolgt anschließend die Einleitung einer weiteren Luftmenge $L_3'$ während einer kurzen Zeitspanne in den Innenraum des Tankdoms 2 zwecks erneuter Reinigung des Filters 3.

Die Mündung 15 der Verbindungsleitung 10 muß nicht unbedingt, wie dargestellt, oberhalb der oberen Niveausonde 13 liegen; es ist auch möglich, diese tiefer anzuordnen, was sich vorteilhaft auf die Bauhöhe auswirkt, weil dadurch der Dosierbehälter 11 gegenüber dem Tank 1 höher zu liegen kommt. Unter solchen Umständen läßt sich sogar erreichen, daß der Dosierbehälter an die Stirnseite eines Tanks angebaut oder in diesen integriert werden kann. Dies ist in der Regel vorteilhafterweise dann möglich, wenn die mittlere Dichte des fluidisierten Kohlenstaubs im Dosierbehälter 11 unter 400 kg/m$^3$ liegt. Unter diesen Bedingungen rutscht der Kohlenstaub auch dann in den Dosierbehälter 11 hinein, wenn die Mündung 15 der Verbindungsleitung 10 mehr oder weniger weit unterhalb des Niveaus der Kohlenstaubsäule im Dosierbehälter 11 liegt.

Die Dosierscheibe 16 ist, wie insbesondere aus Fig. 2 hervorgeht, mit Zellen 24 versehen, die in regelmäßigen Abständen längs eines Kreises um die Drehachse angeordnet sind. Im einfachsten Falle handelt es sich bei den Zellen um achsparallele Bohrungen in der Scheibe 16; die Zellen 24 können aber auch aus am Umfang der Scheibe 16 befindlichen Ausschnitten bestehen. Die die Trägerluft zuführende Leitung 18 mündet unmittelbar oberhalb der Scheibe 16 in einem Abstand von der Drehachse der Scheibe 16, so daß die Mündung koaxial zu den Zellen 24 liegt. In entsprechender Lage befindet sich die Mündung der die mit Kohlenstaub beladenen Trägerluft abführenden Leitung der Dosierscheibe 16. Vorteilhafterweise sind die Rohrmündungen der Rohre 18, 19 mit sie umgebenden Dichtungen 22, 23 versehen. Diese haben die Aufgabe, die Verwirbelung des Kohlenstaubs in unmittelbarer Nachbarschaft der Zellen 24 durch aus den Spalten S zwischen den Rohrmündungen und der Dosierscheibe 16 austretenden Leckluftmengen geringstmöglich zu halten und damit die Füllung der Zellen 24 in der Dosierscheibe 16 mit Kohlenstaub nicht zu beeinträchtigen. Dies wird weiterhin dadurch gefördert, daß die Zellen in der Dosierscheibe 16 gekrümmt verlaufen, und zwar in Bewegungsrichtung gesehen, rückwärts gekrümmt sind, wie dies insbesondere aus Fig. 2 hervorgeht. Von Vorteil ist weiterhin die Anordnung schräg gestellter Leitbleche 25 in unmittelbarer Nachbarschaft der Mündungen der Rohre 18, 19.

Der Austrag der relativ kleinen Kohlenstaubmengen $K_2'$ pro Zeiteinheit mit Hilfe der Trägerluftmenge $L_4$ erfolgt mittels der Dosiereinrichtung, welche aus einer im unteren Bereich des Behälters 11 angeordneten, sich in einer horizontalen Ebene drehenden Dosierscheibe 16 mit ihrer Antriebswelle und dem Antriebsmotor 17, welcher auf dem Deckel des Dosierbehälters 11 angeordnet ist, sowie den Rohrleitungen 18 und 19 besteht, durch welche einerseits die Trägerluft zugeführt und andererseits der mit Kohlenstaub beladene Luftstrom abgeführt wird. Da zwecks Fluidisierung der Kohlenstaubmenge $K_2$ im Dosierbehälter Druckluft in diesen eingeführt wird, ist es erforderlich, die überschüssige Luftmenge, die gegebenenfalls noch mit geringen Mengen Kohlenstaubs beladen sein kann, über eine Leitung 20 in den Innenraum des Tanks 1 zurückzuführen.

Vorteilhafterweise sitzt die Dosiereinrichtung mit allen ihren Elementen an dem Deckel 21 des Dosierbehälters 11, um diese beispielsweise bei Störungen in einfacher Weise austauschen zu können. Es ist in einem solchen Fall lediglich notwendig, den Deckel 21 vom Behälter 11 zu lösen und diesen nach oben abzuziehen.

Es hat sich als günstig erwiesen, wenn die Höhe der Kohlenstaubsäule im Dosierbehälter 11 etwa 400 bis 800 mm und die durch den luftdurchlässigen Boden 12 hindurchtretende Fluidisierungsluftmenge $L_2$ etwa 30 $m^3$/h pro Quadratmeter Bodenfläche beträgt, entsprechend einem Druckverlust der Luftmenge $L_2$ beim Durchströmen des Bodens 12 von etwa 200 bis 400 WS, je nach dem Widerstand des luftdurchlässigen Bodens 12. Die Luftmenge $L_2$ wird vorzugsweise so eingeregelt, daß sich eine mittlere Dichte des fluidisierten Kohlenstaubs $K_2$ im Dosierbehälter 11 von etwa 200 bis 250 $kg/m^3$ einstellt. Unter derartigen Bedingungen hat der Kohlenstaub besonders günstige Fließeigenschaften, so daß er sich gut und exakt dosieren läßt.

Die Größe des luftdurchlässigen Bodens 12 beträgt zweckmäßigerweise ca. 0,4 m$^2$ pro 1000 kg/h Kohlenstaubdurchsatz, wobei aus Gründen des Randeinflusses für kleinere Durchsätze etwas größere und für größere Durchsätze etwas kleinere Flächendimensionen gewählt werden sollten. Unter diesen Bedingungen erhält man besonders günstige Bewegungsverhältnisse des fluidisierten Kohlenstaubs, insbesondere im Bereich der Dosierscheibe 16. Der Dosierbehälter kann jedwede Querschnittsform aufweisen, zweckmäßigerweise verwendet man einen runden oder quadratischen Querschnitt. Je nach den in Betracht kommenden Verhältnissen können ein oder mehr Dosiereinrichtungen nebeneinander im Dosierbehälter angeordnet sein.

Der Gegenstand der Erfindung ist nicht auf die Lagerung und das dosierte Austragen von Kohlenstaub beschränkt; vielmehr läßt sich der Erfindungsgegenstand auch auf alle fluidisierbaren feinkörnigen Produkte anwenden, wobei je nach der Materialdichte entsprechend angepaßte Dimensionen der mechanischen Teile sowie der Drücke und Mengen vorzusehen sind.

## Ansprüche

1. Kohlenstaubtank mit Einrichtung zum dosierten Austragen insbesondere kleiner Kohlenstaubmengen in einem gleichmäßigen Strom, gekennzeichnet durch die Kombination folgender Merkmale:

a) dem Kohlenstaubtank (1) ist ein die Dosier- und Austragseinrichtung (16,17) enthaltender Dosierbehälter (11) zugeordnet, welche beide mittels einer im tiefsten Bereich des Tanks (1) angeordneten Leitung (10) oder Öffnung miteinander verbunden sind;

b) in dem Kohlenstaubtank (1) und in dem Dosierbehälter (11) sind luftdurchlässige Böden (4;12) angeordnet, von welchen zumindest derjenige im Kohlenstaubtank (1) unter einem Winkel von etwa 8 bis 15$^{\circ}$, vorzugsweise etwa 10$^{\circ}$, gegenüber einer Horizontalen geneigt ist und sich bis an die Kohlenstaub-Austrittsöffnung des Tanks (1) erstreckt;

c) der unter dem luftdurchlässigen Boden (4) im Tank (1) befindliche Raum ist durch Stege od.dgl. in mehrere Kammern unterteilt;

d) in die unter den luftdurchlässigen Böden im Tank (1) und im Dosierbehälter (11) befindlichen Räume münden Druckluftleitungen, von welchen die an die Kammern unter dem Boden (4) im Tank (1) angeschlossenen Druckluftleitungen (5) mit einem die Druckluft periodisch, stoßweise pulsierend abgebenden Luftverteiler (6) verbunden sind;

e) der Kohlenstaubtank (1) ist an seiner höchsten Stelle mit einem Tankdom (2) od.dgl. verbunden, dessen Innenraum mittels eines Filters (3) gegen den Innenraum des Tanks (1) abgeteilt ist und in welchem einerseits eine vorzugsweise an den Druckluft periodisch, gegebenenfalls stoßweise pulsierend abgebenden Luftverteiler (6) angeschlossene Druckluftleitung (8) einmündet und in dessen Wandung sich eine mit der Atmosphäre in Verbindung stehende, eine vorzugsweise einstellbare Drossel (9) enthaltende Öffnung befindet;

f) der Raum oberhalb der Kohlenstaubsäule ($K_2$) im Dosierbehälter (11) ist über eine Leitung (20) mit dem Raum unterhalb des Filters (3) verbunden;

g) in dem Dosierbehälter (11) befinden sich zwei die programmgemäße Druckluftabgabe durch den Luftverteiler (6) steuernde Niveausonden (13,14).

2. Kohlenstaubtank nach Anspruch 1, dadurch gekennzeichnet, daß die Mündung (15) der Verbindungsleitung (10) zwischen dem Tank (1) und dem Dosierbehälter (11) unterhalb des niedrigsten, von der unteren Niveausonde (14) bestimmten Niveaus der Kohlenstaubsäule ($K_2$) im Dosierbehälter (11) liegt.

3. Kohlenstaubtank nach Anspruch 1 oder 2, dadurch gekennzeichnet, daß längs der tiefsten Stelle der Verbindungsleitung (10) ein mit vorzugsweise in Förderrichtung geneigten Luftaustrittsöffnungen versehenes und an den Luftverteiler (6) angeschlossenes Rohr angeordnet ist.

4. Kohlenstaubtank nach Anspruch 1, 2 oder 3, dadurch gekennzeichnet, daß die Dosier- und Austragseinrichtung im unteren Bereich des Dosierbehälters (11) aus einer, um eine vertikale Achse drehbaren, von einem Motor (17) gesteuert angetriebenen, mit längs eines Kreises angeordneten Zellen (24) versehenen Dosierscheibe (16) und einer die Trägerdruckluft der Dosierscheibe (16) zuführenden Rohrleitung (18) und einer die mit Kohlenstaub beladene Trägerluft von der Dosierscheibe (16) abführenden Rohrleitung (19), deren Mündungen koaxial zueinander und dicht ober- bzw. unterhalb der Dosierscheibe (16) sowie koaxial zu dessen Zellen (24) beim Passieren der Leitungsmündungen liegen, besteht und daß die Dosier- und Austragseinrichtung (16,17,18,19) ausschließlich an dem abnehmbaren Deckel (21) des Dosierbehälters (11) befestigt ist.

5. Kohlenstaubtank nach Anspruch 4, dadurch gekennzeichnet, daß die Mündungen der Luftleitungen (18,19) ober- und unterhalb der Dosierscheibe (16) mit sie umgebenden Dichtungen (22,23) versehen sind.

6. Kohlenstaubtank nach Anspruch 4 oder 5, dadurch gekennzeichnet, daß die Zellen (24) in der Dosierscheibe (16) aus in Bewegungsrichtung rückwärts gekrümmten Kanälen bestehen und daß die Mündungen der Luftleitungen koaxial zu den äußeren Enden dieser Kanäle angeordnet sind.

7. Kohlenstaubtank nach Anspruch 4, 5 oder 6, dadurch gekennzeichnet, daß ober- und unterhalb der Dosierscheibe (16) in der Nähe der Luftleitungsmündungen Leckluftleitbleche (25) angeordnet sind.

8. Kohlenstaubtank nach einem oder mehreren der Ansprüche 1 bis 7, dadurch gekennzeichnet, daß der luftdurchlässige Boden (4) im Tank (1) eine Größe von etwa 0,2 bis 0,6, vorzugsweise von etwa 0,4 $m^2$/ 1000 kg Kohlenstaub/Stunde bei maximaler Förderleistung besitzt.

9. Kohlenstaubtank nach einem oder mehreren der Ansprüche 1 bis 8, dadurch gekennzeichnet, daß die den luftdurchlässigen Boden (4) im Tank (1) durchströmende Druckluftmenge etwa 15 bis 60, vorzugsweise 30 $m^3$/h pro $m^2$ Bodenfläche und die mittlere Dichte des fluidisierten Kohlenstaubs ($K_1$) etwa 200 bis 250 kg/$m^3$ betragen.

10. Kohlenstaubtank nach einem oder mehreren der Ansprüche 1 bis 9, dadurch gekennzeichnet, daß zwei den Kohlenstaub enthaltende Tanks (1) einer Dosier- und Austragseinrichtung (16,17,18,19) zugeordnet sind.

11. Kohlenstaubtank nach einem oder mehreren der Ansprüche 1 bis 10, dadurch gekennzeichnet, daß in jedem Dosierbehälter (11) zwei oder mehr Dosier- und Austragseinrichtungen (16,17,18,19) angeordnet sind.

*Fig.1*

*Fig.2*

Europäisches
Patentamt

**EUROPÄISCHER RECHERCHENBERICHT**

| Kategorie | Kennzeichnung des Dokuments mit Angabe soweit erforderlich, der maßgeblichen Teile | betrifft Anspruch | KLASSIFIKATION DER ANMELDUNG (Int Cl.³) |
|---|---|---|---|
| | **EINSCHLÄGIGE DOKUMENTE** | | |
| | FR - A - 2 413 298 (FIVES-CAIL BABCOCK)<br>* Patentansprüche 1 et 4; Figuren * | 1 | F 23 K 3/02<br>B 65 G 53/22<br>B 65 D 88/72 |
| | -- | | |
| | GB - A - 887 309 (HENRY SIMON)<br>* Patentanspruch 5; Figur 4 * | 1 | |
| | -- | | |
| X | DE - C - 967 759 (DANSMIDTH)<br>* Seite 6, Zeilen 1 à 36; Figur 10 * | 4,5 | RECHERCHIERTE SACHGEBIETE (Int Cl.³)<br><br>B 65 D<br>B 65 G<br>F 23 K |
| | ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angefuhrtes Dokument
L: aus andern Gründen angefuhrtes Dokument
&: Mitglied der gleichen Patent- familie. übereinstimmendes Dokument

Der vorliegende Recherchenbericht wurde für alle Patentanspruche erstellt

| Recherchenort | Abschlußdatum der Recherche | Prufer |
|---|---|---|
| Den Haag | 11-09-1980 | BAETENS |

EPA form 1503.1   06.78